(19) Europäisches Patentamt / European Patent Office / Office européen des brevets

(11) **EP 2 270 956 A2**

(12) **DEMANDE DE BREVET EUROPEEN**

(43) Date de publication:
**05.01.2011 Bulletin 2011/01**

(51) Int Cl.:
*H02K 1/27* (2006.01)   *H02K 21/16* (2006.01)
*H02P 27/04* (2006.01)   *H02P 27/08* (2006.01)

(21) Numéro de dépôt: **10177277.0**

(22) Date de dépôt: **29.03.2004**

(84) Etats contractants désignés:
**AT BE BG CH CY CZ DE DK EE ES FI FR GB GR HU IE IT LI LU MC NL PL PT RO SE SI SK TR**

(30) Priorité: **31.03.2003 FR 0303980**

(62) Numéro(s) de document de la (des) demande(s) initiale(s) en application de l'article 76 CBE:
**04742388.4 / 1 609 226**

(27) Demande déposée antérieurement:
**29.03.2004 PCT/FR2004/000787**

(71) Demandeur: **Moteurs Leroy-Somer**
**16000 Angouleme (FR)**

(72) Inventeurs:
• **Abou Akar, Atef**
**16430, Vindelle (FR)**
• **Saint Michel, Jacques**
**16000, Angouleme (FR)**

(74) Mandataire: **Tanty, François**
**Nony & Associés**
**3, rue de Penthièvre**
**75008 Paris (FR)**

Remarques:
Cette demande a été déposée le 17-09-2010 comme demande divisionnaire de la demande mentionnée sous le code INID 62.

(54) **Machine électrique synchrone comportant un stator et au moins un rotor et dispositif de commande associé.**

(57)   La présente invention concerne un ensemble comportant :
- une machine électrique synchrone comportant :
- un stator (10), et
- au moins un rotor (20) à aimants permanents (21),

la machine étant agencée de manière à avoir $X_d > X_q$, où $X_d$ est la réactance directe et $X_q$ la réactance en quadrature, cette machine constituant un moteur synchrone, et

- un dispositif de commande d'un moteur synchrone permettant le fonctionnement du moteur à puissance sensiblement constante $P_o$ sur une plage de vitesses de rotation du rotor, comportant un calculateur (45) agencé pour déterminer les valeurs d'intensités directe $I_d$ et en quadrature Iq du courant d'alimentation du moteur.

Fig. 1

**Description**

La présente invention concerne le domaine des machines électriques tournantes.

L'invention concerne plus particulièrement mais non exclusivement les machines synchrones à aimants permanents pouvant fonctionner à puissance sensiblement constante sur une large plage de vitesses, par exemple les machines de levage ou de traction électrique.

Dans le cadre du levage, il est utile d'adapter la vitesse de levage à la charge levée afin de réduire le temps de levage lorsque cette charge est faible tout en permettant d'assurer le levage des pièces plus lourdes.

Dans le cadre de la traction électrique, au démarrage ou lorsque le véhicule aborde une montée, le moteur doit fournir un fort couple à basse vitesse. En revanche, sur un parcours horizontal, les efforts à fournir sont moindres, et le véhicule peut rouler plus vite sans nécessiter plus de puissance du moteur.

Les machines synchrones peuvent fonctionner à couple constant jusqu'à une certaine vitesse appelée vitesse de base. Jusqu'à cette vitesse de base, la puissance croit sensiblement proportionnellement à la vitesse de rotation du rotor. Au-delà de la vitesse de base, le couple diminue à puissance sensiblement constante.

Les phases de l'induit peuvent être modélisées chacune par une inductance qui regroupe les termes d'auto-induction, de mutuelles entre phases et de fuite. Cette inductance dépend de la position angulaire du rotor relativement au stator, et a pour composantes dans un repère lié à la pulsation électrique l'inductance directe $L_d$ et l'inductance en quadrature $L_q$. La réactance directe $X_d$ désigne le produit de l'inductance directe $L_d$ par la pulsation électrique $\omega$, et la réactance en quadrature $X_q$ désigne le produit de l'inductance Lq en quadrature par la pulsation électrique $\omega$. La vitesse de rotation du rotor $\Omega$ est liée à la pulsation électrique $\omega$ par la relation $\omega = z\Omega$, où z désigne le nombre de paires de pôles.

Dans le repère lié à la pulsation électrique, l'inductance directe $L_d$ d'une phase de l'induit est la valeur de l'inductance dans l'axe *d* dit direct, c'est-à-dire lorsque l'axe des pôles inducteurs coïncide avec celui des bobines du stator de cette même phase. L'inductance en quadrature Lq est la valeur de l'inductance dans l'axe *q* dit en quadrature, c'est-à-dire quand l'axe des pôles inducteurs est perpendiculaire à l'axe des bobines du stator pour cette même phase.

Les machines électriques tournantes à aimants permanents connues pour le levage et la traction électrique sont majoritairement des machines dites à pôles lisses, pour lesquelles la réactance directe $X_d$ est sensiblement égale à la réactance en quadrature $X_q$.

En plus des machines à pôles lisses, on trouve aussi des machines dites à saillance inversée, pour lesquelles la réactance directe $X_d$ est nettement inférieure à la réactance en quadrature $X_q$. Leur principal avantage est que le couple de réluctance, qui est proportionnel à la différence entre les réactances $X_q$ et $X_d$, s'ajoute, en fonctionnement normal, au couple de force électromotrice généré par les aimants, ce qui permet, à couple demandé identique, de réduire le volume des aimants et donc le prix de la machine. Pour ce type de machine, il existe un décalage optimal en avance de phase du courant par rapport à la force électromotrice pour lequel le couple est maximal. C'est ce point de fonctionnement qui est retenu jusqu'à la vitesse de base.

Au-delà de la vitesse de base, la tension aux bornes des phases de la machine devient toutes choses égales par ailleurs supérieure à la tension disponible fournie par le réseau à la machine par l'intermédiaire du dispositif de commande, en raison de la force électromotrice qui varie proportionnellement à la vitesse.

Pour réduire la tension aux bornes des phases de la machine, on agit sur le courant dans les enroulements du stator et sur son déphasage par rapport au flux inducteur, c'est-à-dire celui des aimants, pour créer un flux magnétique s'opposant partiellement au flux inducteur. Cette opération est appelée « défluxage » et génère des pertes électriques d'autant plus importantes que le courant nécessaire au défluxage est élevé.

Il existe un besoin pour améliorer les machines synchrones et leur permettre de fonctionner avec un rendement élevé à puissance sensiblement constante sur une large plage de vitesses, et notamment au-delà de la vitesse de base.

L'invention répond à ce besoin grâce à une machine électrique synchrone comportant un stator et au moins un rotor à aimants permanents, la machine se caractérisant par le fait qu'elle est agencée de manière à avoir $X_d > X_q$, où $X_d$ est la réactance directe et $X_q$ la réactance en quadrature. On a par exemple $X_d/X_q > 1,1$, mieux $X_d/X_q > 1,5$. On peut avoir par exemple $X_d/X_q \cong 3$.

Les avantages apportés par l'invention sont les suivants.

D'une part, le facteur de puissance cos $\phi$ variant en sens inverse de la réactance en quadrature $X_q$, une faible valeur de $X_q$ permet d'obtenir un facteur de puissance élevé. On a par exemple, suivant le niveau de facteur de puissance recherché, $X_q\, I_o/E$ compris entre 0,33 et 0,6, où $I_o$ désigne l'intensité maximale du courant de ligne imposée par le calibre du variateur et E la force électromotrice induite par phase de la machine.

D'autre part, le flux des aimants étant orienté dans l'axe d direct, le défluxage s'effectue en injectant dans l'induit un courant de manière à générer dans l'axe direct *d* un flux proportionnel à la réactance directe $X_d$ et à la composante $I_d$ de l'intensité dans l'axe direct. Avec une réactance directe $X_d$ élevée, on obtient un défluxage important avec moins de courant direct $I_d$ et donc moins de pertes correspondantes, ce qui a pour conséquence de réduire le calibre du dispositif de commande et d'améliorer le rendement.

De plus, avec $X_d$ élevé, on diminue le risque de démagnétisation en cas de court-circuit, lié à la valeur du courant de court-circuit. Ce courant est proportionnel au rapport entre la force électromotrice et la réactance directe, et il est donc faible lorsque la réactance directe $X_d$ est grande. On a par exemple, suivant la plage de défluxage demandée, $X_d I_o/E$ compris entre 0,66 et 1, où $I_o$ désigne l'intensité maximale du courant de ligne imposée par le calibre du variateur et E la force électromotrice induite par phase de la machine.

Jusqu'à la vitesse de base, la machine peut fonctionner avec un courant en phase avec la force électromotrice. Le couple de force électromotrice est maximal et le couple de réluctance est nul. La vitesse de base peut être supérieure à 100 ou 200 tours par minute, par exemple.

Dans une réalisation particulière, le stator comporte des dents portant chacune au moins une bobine individuelle et ces dents sont dépourvues d'épanouissements polaires. Cela permet notamment la mise en place sur les dents de bobines préfabriquées, ce qui simplifie la fabrication de la machine.

Le rotor est avantageusement à concentration de flux, les aimants permanents du rotor étant alors disposés entre des pièces polaires. Cela permet de diminuer la quantité d'aimants, donc de réduire le coût de la machine.

Les valeurs des réactances directe et en quadrature peuvent être déterminées par la forme des pièces polaires du rotor, et notamment par la forme des parties saillantes de ces pièces polaires.

Les parties saillantes de deux pièces polaires successives peuvent définir entre elles une encoche présentant deux bords opposés comportant des portions radiales et un fond partiellement formé par une face d'au moins un aimant permanent.

Une telle forme des pièces polaires provoque une dissymétrie entre les réactances directe et en quadrature et une différence positive relativement importante entre les réactances directe et en quadrature.

Les pièces polaires du rotor peuvent comporter chacune une face tournée vers le stator qui présente une portion convexe. La portion convexe d'une pièce polaire peut présenter un rayon de courbure compris entre 20 % et 30 % d'un rayon du stator, notamment d'un rayon intérieur du stator, voire 25 % environ.

Les extrémités circonférentielles de cette portion convexe peuvent être décalées angulairement par rapport aux aimants permanents qui sont adjacents à cette pièce polaire. Le décalage angulaire des extrémités circonférentielles par rapport aux aimants permanents adjacents peut être compris :

- entre $\dfrac{80°}{n_{dents}}$ et $\dfrac{100°}{n_{dents}}$, étant par exemple de $\dfrac{90°}{n_{dents}}$ environ, pour une machine dont le rapport entre le nombre de dents $n_{dents}$ du stator et le nombre de pôles $n_{pôles}$ du rotor est de 3/2 ou qui vérifie la relation $\dfrac{n_{dents}}{n_{pôles}} = \dfrac{6n}{6n-2}$, avec n entier supérieur ou égal à 2, et

- entre $\dfrac{50°}{n_{dents}}$ et $\dfrac{70°}{n_{dents}}$, étant par exemple de $\dfrac{60°}{n_{dents}}$ environ, pour une machine qui vérifie la relation $\dfrac{n_{dents}}{n_{pôles}} = \dfrac{6n}{6n+2}$, avec n entier supérieur ou égal à 2.

Chacun des aimants permanents du rotor peut se situer radialement en retrait des extrémités circonférentielles des portions convexes des deux pièces polaires adjacentes. Le retrait dans la direction radiale des aimants par rapport aux extrémités circonférentielles des portions convexes peut être compris entre 10 % et 20 %, étant par exemple de 15 % environ, d'un rayon du stator, notamment d'un rayon intérieur du stator.

Chacune des pièces polaires du rotor peut comporter deux épaulements. Un aimant permanent peut se situer entre les épaulements de deux pièces polaires adjacentes.

Chacune des pièces polaires du rotor peut comporter une partie saillante s'étendant en direction du stator, ayant des bords radiaux qui sont décalés angulairement par rapport à des bords dirigés radialement des aimants permanents adjacents à cette pièce polaire.

Les aimants permanents du rotor peuvent présenter, lorsque la machine est observée selon l'axe de rotation du rotor, une section transversale de forme allongée dans une direction radiale. En particulier, les aimants permanents du rotor peuvent présenter, lorsque la machine est observée selon l'axe de rotation du rotor, une section transversale rectangulaire de grand côté orienté parallèlement à un rayon de la machine.

Dans une mise en oeuvre particulière de l'invention, le rapport $X_d/X_q$ est choisi de manière à obtenir à la vitesse maximale de rotation du rotor sensiblement la même puissance que celle obtenue à la vitesse de base, avec la même tension et le même courant.

De préférence, parmi les valeurs possibles pour le rapport $X_d/X_q$ permettant d'obtenir le résultat mentionné ci-dessus, on choisit le plus petit pour éviter d'avoir une saillance élevée qui se traduirait par des pôles de plus faible ouverture et un entrefer équivalent plus grand, et ce qui aurait pour conséquence d'augmenter le volume des aimants, donc le prix et le poids de la machine. Une saillance élevée réduirait en outre le couple maximal que la machine serait en mesure de fournir, ce qui limiterait les possibilités de surcharge.

Le stator peut comporter 6n dents et le rotor 6n $\pm$ 2 pôles, n étant supérieur ou égal à 2. Une telle structure peut permettre de réduire à la fois les oscillations de couple et les harmoniques de tension.

La machine peut comporter un seul rotor intérieur ou, en variante, un rotor intérieur et un rotor extérieur, disposés radialement de part et d'autre du stator et accouplés en rotation. L'utilisation d'un rotor double peut permettre de réduire les pertes fer.

La machine peut constituer un générateur ou un moteur.

La puissance de la machine peut être supérieure ou égale à 0,5 kW, étant par exemple de l'ordre de 1,5 kW, cette valeur n'étant nullement limitative.

L'invention a encore pour objet, indépendamment ou en combinaison avec ce qui précède, une machine électrique comportant :

- au moins un stator,
- au moins un rotor,

le rotor comportant des pièces polaires et des aimants permanents disposés entre les pièces polaires, chaque pièce polaire comportant une partie saillante et de part et d'autre de cette partie saillante un épaulement.

Les épaulements de deux pièces polaires adjacentes peuvent venir à affleurement de l'aimant permanent disposé entre elles.

Chaque partie saillante peut être délimitée dans le sens circonférentiel par un bord s'étendant radialement.

Chaque pièce polaire peut ne pas recouvrir les aimants permanents adjacents dans le sens circonférentiel.

Chaque partie saillante peut être délimitée radialement par un bord continûment arrondi.

Chaque pièce polaire peut être symétrique par rapport à un plan médian orienté radialement.

Chaque pièce polaire peut comporter un empilage de tôles magnétiques.

La partie saillante peut comporter un bord radialement extérieur circulaire dont le centre de courbure est différent du centre de rotation, le centre de courbure étant par exemple situé sur un rayon entre le centre de rotation et le demi-diamètre maximal du rotor.

L'écartement angulaire entre deux parties saillantes adjacentes peut être supérieur à la largeur angulaire de l'aimant permanent disposé entre les pièces polaires correspondantes.

Les aimants permanents peuvent comporter une face extérieure faisant face au stator.

L'invention a encore pour objet un dispositif de commande permettant de commander une machine telle que définie plus haut.

L'invention a encore pour objet, indépendamment ou en combinaison avec ce qui précède, un dispositif de commande d'un moteur synchrone permettant le fonctionnement du moteur à puissance constante $P_o$ sur une plage de vitesse de rotation du rotor, comportant un calculateur agencé pour déterminer les valeurs d'intensités directe $I_d$ et en quadrature $I_q$ du courant d'alimentation du moteur, les intensités $I_d$ et $I_q$ étant égales, à 20 % près, mieux à 10 % près, mieux encore à 5 % près, à : $I_d \cong i_d.I_o \cong -i \sin \alpha.I_o$ et $I_q \cong i_q.I_o \cong i \cos \alpha.I_o$, où $I_o$ est l'intensité maximale du courant de ligne imposée par le calibre du dispositif de commande,

$$\alpha = \text{arctg} \left( \frac{x_q}{x_d} \frac{(e-y)}{x} \right) ,$$

$$i = \sqrt{\left( \frac{x}{x_q} \right)^2 + \left( \frac{e-y}{x_d} \right)^2} ,$$

le courant unitaire circulant dans une phase de l'induit,
(x, y) étant l'une des racines réelles des équations

$$x^2 + y^2 = \frac{v^2}{m^2} \text{ et } y = e\left(1 - \frac{x_d}{x_d - x_q}\right) + \frac{p}{m}e\frac{x_d\,x_q}{x_d - x_q}\frac{1}{x},$$

m désigne le rapport entre la vitesse de rotation du rotor et la vitesse de base,

e est le rapport entre, d'une part, la force électromotrice, et d'autre part, le produit de m par la tension maximale par phase $V_o$ imposée par le réseau d'alimentation,

v est le rapport entre la tension aux bornes d'une phase de l'induit et la tension $V_o$ imposée par le réseau d'alimentation,

p est le rapport entre la puissance effective et la puissance constante $P_o$ à laquelle on souhaite que la machine fonctionne, et

$\alpha$ le déphasage entre l'intensité et la force électromotrice.

Par « intensité directe » et « intensité en quadrature », on entend les valeurs de l'intensité projetée sur les axes direct d et en quadrature q du repère lié à la pulsation électrique.

On désigne par $x_d$ le quotient $\dfrac{X_d I_o}{mV_o}$, $X_d$ étant la réactance directe.

De la même façon, $x_q = \dfrac{X_q I_o}{mV_o}$, où $X_q$ est la réactance en quadrature.

Un tel dispositif de commande décale le courant d'un angle $\alpha$ par rapport à la force électromotrice, tout en maintenant la tension constante, et la composante $i_d$ de i dans l'axe direct d va créer un flux qui va s'opposer au flux principal. La force magnétomotrice totale se trouve donc réduite, entraînant par conséquent une chute de la tension induite globale.

On ne peut augmenter la valeur unitaire i du courant au-delà de sa valeur nominale pour des raisons liées à l'échauffement de la machine et au calibre du dispositif de commande.

On peut obtenir la tension désirée avec le minimum de décalage $\alpha$, c'est-à-dire la plus faible intensité directe unitaire $i_d$, afin de disposer de plus de courant en quadrature qui contribue à la création du couple.

Le rapport de défluxage est la valeur de m maximale qui permet d'obtenir la même puissance $P_o$ que celle qu'on obtient à la vitesse de base avec la même tension $V_o$ et le même courant $I_o$ définis précédemment. On peut en déduire les valeurs de la force électromotrice, et celle des réactances directe et en quadrature pour une machine donnée. Le rapport $X_d/X_q$ ainsi trouvé pour $P_o$, $V_o$ et $I_o$ donnés est une fonction croissante du rapport de défluxage recherché, ce dernier pouvant être par exemple supérieur à 2, étant par exemple égal à 6.

Parmi les solutions (x, y) possibles, on choisit de préférence celle qui minimise i.

Le dispositif de commande qui vient d'être décrit est de préférence utilisé en combinaison avec un moteur synchrone ayant $X_d > X_q$ tel que défini plus haut.

Le dispositif de commande peut comporter en outre :

- un onduleur triphasé,
- un contrôleur vectoriel agencé pour transmettre en fonction des intensités $i_d$ et $i_q$ les signaux de commande aux interrupteurs électroniques de l'onduleur.

L'invention a encore pour objet, indépendamment ou en combinaison avec ce qui précède, un procédé de contrôle d'un moteur dans lequel on mesure au moins la tension d'alimentation d'un onduleur relié au moteur et la vitesse de rotation du moteur, et on détermine par calcul en temps réel et/ou par accès à un registre les intensités directe $i_d$ et en quadrature $i_q$ du courant d'alimentation permettant de maintenir, pour une consigne de vitesse $\Omega^*$ donnée au dessus de la vitesse de base, la puissance constante.

On peut déterminer une consigne de couple t* en fonction au moins de l'écart entre la vitesse de rotation mesurée et la consigne de vitesse de rotation du rotor $\Omega^*$. On peut déterminer une consigne de puissance en fonction au moins de la consigne de couple et de la vitesse de rotation mesurée. On peut calculer les intensités unitaires directe $i_d$ et en quadrature $i_q$ en temps réel à partir de la consigne de puissance, de la vitesse de rotation mesurée et de la tension continue d'alimentation de l'onduleur. Les intensités directe et en quadrature peuvent être déterminées selon les lois de commande en fonction de la charge et de la tension d'alimentation de l'onduleur. Ces lois de commande peuvent être intégrées dans le calculateur afin d'améliorer ses performances dynamiques.

La présente invention a encore pour objet, indépendamment ou en combinaison avec ce qui précède, un véhicule électrique comportant un moteur comportant :

- un stator, et
- au moins un rotor à aimants permanents,

le moteur étant agencé de manière à avoir $X_d > X_q$,
où $X_d$ est la réactance directe et $X_q$ la réactance en quadrature.

Le véhicule peut encore comporter un dispositif de commande d'un moteur synchrone, permettant le fonctionnement du moteur à puissance constante sur une plage de vitesses de rotation du rotor, comportant un calculateur agencé pour déterminer les valeurs des intensités directe $I_d$ et en quadrature $I_q$ du courant d'alimentation du moteur injectées dans le moteur, les intensités $I_d$ et $I_q$ étant égales, à 20 % près, mieux à 10 % près, mieux encore à 5 % près, à : $I_d \cong i_d \cdot I_o \cong -i \sin \alpha \cdot I_o$ et $I_q \cong i_q \cdot I_o \cong i \cos \alpha \cdot I_o$ où $I_o$ est l'intensité maximale du courant imposée par le calibre du dispositif de commande,

$$\alpha = \mathrm{arctg}\left(\frac{x_q}{x_d} \frac{(e - y)}{x}\right),$$

$$i = \sqrt{\left(\frac{x}{x_q}\right)^2 + \left(\frac{e - y}{x_d}\right)^2},$$

le courant unitaire circulant dans une phase de l'induit,
(x, y) étant l'une des racines réelles des équations

$$x^2 + y^2 = \frac{v^2}{m^2} \text{ et } y = e\left(1 - \frac{x_d}{x_d - x_q}\right) + \frac{p}{m} e \frac{x_d x_q}{x_d - x_q} \frac{1}{x},$$

m désigne le rapport entre la vitesse de rotation du rotor et la vitesse de base,
e est le rapport entre, d'une part, la force électromotrice, et d'autre part, le produit de m par la tension maximale par phase $V_o$ imposée par le réseau d'alimentation,
v est le rapport entre la tension aux borne d'une phase de l'induit et la tension $V_o$ imposée par le réseau d'alimentation,
p est le rapport entre la puissance effective et la puissance constante à laquelle on souhaite que la machine fonctionne, et
$\alpha$ le déphasage entre l'intensité et la force électromotrice.

La présente invention pourra être mieux comprise à la lecture de la description détaillée qui va suivre, d'un exemple non limitatif de mise en oeuvre de l'invention, et à l'examen du dessin annexé, sur lequel :

- la figure 1 représente de façon schématique et partielle, en coupe transversale, une machine conforme à l'invention,
- la figure 2 est un diagramme de Blondel représentant différentes grandeurs sinusoïdales dans un repère lié à la pulsation électrique,
- la figure 3 est un schéma simplifié en blocs d'un dispositif de commande d'un moteur synchrone conforme à l'invention, et
- la figure 4 représente schématiquement un exemple de réalisation du calculateur principal du dispositif de commande de la figure 3.

## Machine électrique

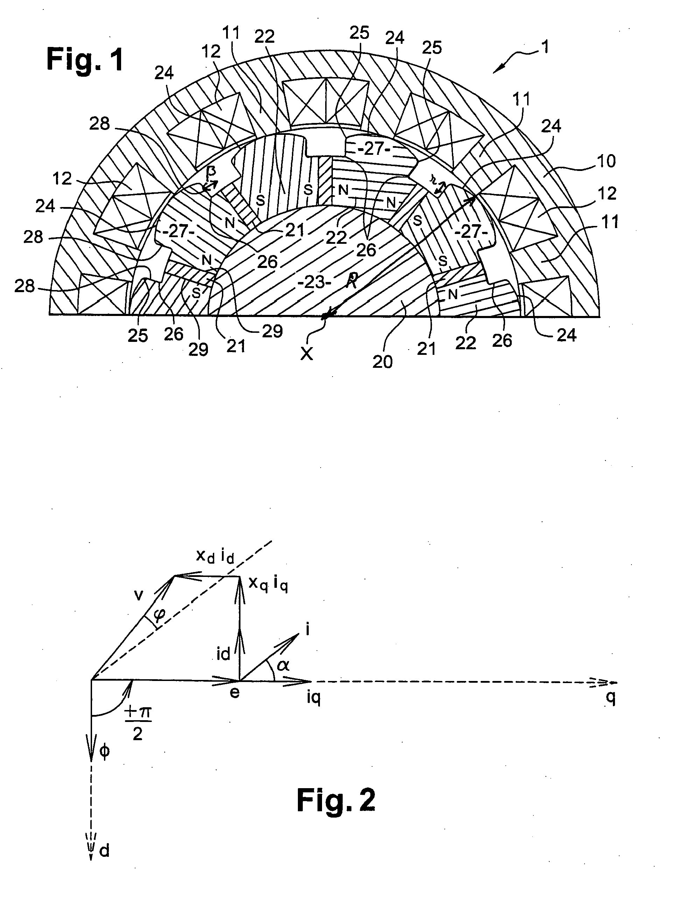

On a représenté sur la figure 1 une machine électrique synchrone 1 comportant un stator 10 et un rotor 20 à aimants permanents 21.

Le stator 10 comporte des dents 11 portant chacune une bobine individuelle 12, les bobines 12 étant connectées électriquement entre elles de manière à être alimentées par un courant triphasé.

Le rotor 20 est à concentration de flux, les aimants permanents 21 étant disposés entre des pièces polaires 22. Les aimants permanents 21 et les pièces polaires 22 sont fixés de façon appropriée sur un arbre 23 de la machine.

Les pièces polaires 22 peuvent être maintenues sur l'arbre 23 par collage, ou encore par réalisation de formes complémentaires sur l'arbre et les pièces polaires, ou encore être maintenues par des barreaux engagés dans les pièces polaires 22 et fixés à leurs extrémités à des flasques du rotor.

Les pièces polaires 22 sont réalisées par un empilage de tôles magnétiques recouvertes chacune d'un vernis isolant, afin de limiter les pertes par courants induits.

Les aimants 21 ont des polarités de même nature, dirigées vers la pièce polaire 22 disposée entre eux, comme on peut le voir sur la figure 1.

Les pièces polaires 22 comportent chacune une partie saillante 27, et leur face tournée vers le stator 10 présente une portion convexe 24. La portion convexe 24 d'une pièce polaire 22 peut présenter un rayon de courbure compris entre 20 % et 30 % d'un rayon du stator, notamment du rayon intérieur du stator, voire 25 % environ.

Chaque portion convexe 24 comporte des extrémités circonférentielles 25 angulairement décalées par rapport aux aimants permanents 21 adjacents. Le décalage angulaire β des extrémités circonférentielles 25 par rapport aux aimants permanents 21 adjacents peut être compris :

- entre $\dfrac{80°}{n_{dents}}$ et $\dfrac{100°}{n_{dents}}$, étant par exemple de $\dfrac{90°}{n_{dents}}$ environ, pour une machine dont le rapport entre le nombre de dents $n_{dents}$ du stator et le nombre de pôles $n_{pôles}$ du rotor est de 3/2 ou qui vérifie la relation

$$\frac{n_{dents}}{n_{pôles}} = \frac{6n}{6n-2},$$ avec n entier supérieur ou égal à 2, par exemple égal à 2 ou 3, et

- entre $\dfrac{50°}{n_{dents}}$ et $\dfrac{70°}{n_{dents}}$, étant par exemple de $\dfrac{60°}{n_{dents}}$ environ, pour une machine qui vérifie la relation

$$\frac{n_{dents}}{n_{pôles}} = \frac{6n}{6n+2},$$ avec n entier supérieur ou égal à 2, par exemple égale à 2 ou 3.

Dans ces relations, $n_{dents}$ désigne le nombre de dents 11 du stator et $n_{pôles}$ le nombre de pièces polaires 27.

Les aimants permanents 21 se situent radialement en retrait des extrémités circonférentielles 25 des portions convexes 24. Le retrait r dans la direction radiale des aimants 21 par rapport aux extrémités circonférentielles 25 des portions convexes 24 peut être compris entre 10 % et 20 %, voire de 15 % environ du rayon intérieur R du stator.

Chaque pièce polaire 22 comporte en outre deux épaulements 26 situés de part et d'autre de la partie saillante 27, chaque aimant permanent 21 se situant entre deux épaulements 26.

Les parties saillantes 27 de chacune des pièces polaires 22 du rotor ont des bords radiaux 28 qui tout comme les extrémités circonférentielles 25 sont décalés angulairement par rapport aux faces 29, dirigées radialement, des aimants permanents 21 adjacents.

Les aimants permanents 21 présentent, lorsque la machine est observée selon l'axe de rotation X, une section transversale de forme allongée dans une direction radiale. Cette section transversale est, dans l'exemple décrit, rectangulaire, de grand côté orienté parallèlement à un rayon de la machine. En variante, les aimants permanents pourraient présenter chacun une forme de coin.

Dans l'exemple considéré, le rotor comporte dix pôles et le stator douze dents, le stator comportant ainsi 6n dents et le rotor 6n ± 2 pôles, n étant égal à 2. On ne sort pas du cadre de la présente invention si n est supérieur à 2.

Dans l'exemple décrit, le rotor est intérieur, mais on ne sort pas du cadre de la présente invention si le rotor est extérieur, ou si la machine comporte à la fois un rotor intérieur et un rotor extérieur, disposés chacun radialement de part et d'autre du stator et accouplés en rotation. Le moteur satisfait avantageusement, conformément à l'invention, à la relation $X_d > X_q$.

**Dispositif de commande**

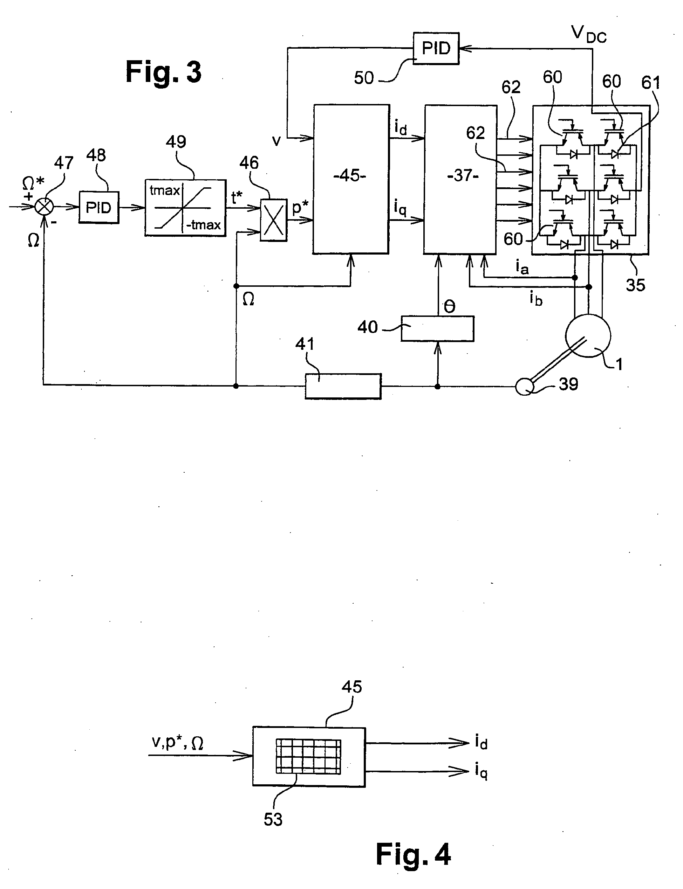

La machine qui vient d'être décrite en référence à la figure 1 peut être commandée par un dispositif de commande permettant son fonctionnement à puissance constante sur une large plage de vitesses de rotation du rotor, comme cela va être décrit en référence aux figures 2 et 3. Ce dispositif de commande est particulièrement adapté à une machine pour laquelle $X_d > X_q$.

Pour plus de clarté, on a représenté sur la figure 2 un repère bien connu lié à la pulsation électrique ω, comportant un axe direct d ayant le même sens et la même direction que le flux inducteur φ, ou flux principal, qui traverse une phase de l'induit, et un axe en quadrature q décalé d'un angle de $+\dfrac{\pi}{2}$ par rapport à l'axe direct d. Les grandeurs sinusoïdales peuvent y être représentées par des vecteurs fixes.

Dans ce qui suit, on utilise les valeurs unitaires e, $x_d$ et $x_q$ définies plus haut.

Le décalage du courant unitaire i par rapport à la force électromotrice unitaire e est choisi pour maintenir la tension constante aux vitesses supérieures à la vitesse de base puisque la composante unitaire $i_d$ de i dans l'axe direct d va créer un flux qui va s'opposer au flux principal, la force magnétomotrice totale se trouvant donc réduite et entraînant par conséquent une chute de la tension unitaire induite v, cela sans nuire outre mesure au couple moteur, le dispositif de commande étant agencé de manière à permettre à la machine de fonctionner avec le couple le plus grand possible au-delà de la vitesse de base. En particulier, le dispositif de commande vise à permettre de fonctionner avec une puissance au delà de la vitesse de base sensiblement égale à la puissance à la vitesse de base.

Le moteur synchrone 1 est alimenté par un courant triphasé provenant d'un onduleur 35 comportant six interrupteurs électroniques 60, par exemple un ou plusieurs IGBT, associés chacun à une diode 61, et commandés par six signaux de commande 62 provenant d'un contrôleur vectoriel 37.

Ce dernier permet de corriger l'intensité du courant fourni au moteur en fonction de consignes d'intensités directe $i_d$ et en quadrature $i_q$ qu'il reçoit d'un calculateur principal 45, des intensités mesurées $i_a$ et $i_b$ pour deux des trois phases, et d'une information de position angulaire θ.

L'information de position angulaire θ est transmise par un calculateur de position 40 relié à un capteur de position 39.

Le capteur de position 39 est également relié à un calculateur de vitesse 41.

La valeur de la vitesse de rotation Ω calculée par le calculateur de vitesse 41 est transmise au calculateur principal 45, à un multiplieur 46 et à un soustracteur 47.

La vitesse de rotation Ω est soustraite à une consigne de vitesse de rotation du rotor Ω* dans le soustracteur 47, puis la différence Ω*-Ω est traitée par un circuit de régulation 48 de type PID (proportionnelle-intégrale-dérivée) et transmise à un calculateur de couple 49 qui détermine une consigne de couple t* en fonction de l'écart entre la vitesse de rotation mesurée Ω et la consigne de vitesse de rotation du rotor Ω*. La consigne de couple t* est plafonnée au couple maximum $t_{max}$ que la machine est capable de fournir.

La consigne de couple t* est transmise au multiplieur 46 qui, en fonction de la vitesse de rotation mesurée Ω du rotor, calcule une consigne de puissance p*.

Cette consigne de puissance p* est transmise au calculateur principal 45.

Par ailleurs, la tension $V_{DC}$ aux bornes de l'onduleur 35 est mesurée et transmise au calculateur principal 45 par un circuit de régulation 50 du type PID pour lisser les variations éventuelles. Ce circuit de régulation 50 fournit une tension unitaire v qui peut varier, étant dépendante de la tension du réseau.

Le calculateur principal 45 détermine à partir des données qu'il reçoit les intensités directe $i_d$ et en quadrature $i_q$ correspondant au fonctionnement à la puissance p*.

Ces valeurs $i_d$ et $i_q$ sont transmises au contrôleur vectoriel 37 et lui permettent de commander, comme cela a été décrit précédemment, l'onduleur 35.

Le calculateur principal 45 peut déterminer les valeurs $i_d$ et $i_q$ par accès à un registre 53 contenant des valeurs précalculées, comme illustré à la figure 4. Ce registre 53 regroupe les valeurs de $i_d$ et $i_q$ pour un grand nombre d'entrées v, p* et Ω. Pour des valeurs v, p* et Ω, le calculateur détermine les valeurs de v, p* et Ω les plus proches pour lesquelles on connaît, dans le registre, 53 $i_d$ (v, p*, Ω) et $i_q$ (v, p*, Ω).

Le calculateur principal 45 peut encore déterminer $i_d$ et $i_q$ analytiquement, par un calcul en temps réel, grâce aux formules suivantes :

$$i_d = -i\,\sin\alpha \text{ et } i_q = i\,\cos\alpha,$$

$$\alpha = \operatorname{arctg}\left(\frac{x_q}{x_d}\frac{(e-y)}{x}\right),$$

$$i = \sqrt{\left(\frac{x}{x_q}\right)^2 + \left(\frac{e-y}{x_d}\right)^2} ,$$

(x, y) étant l'une des racines réelles des équations

$$x^2 + y^2 = \frac{v^2}{m^2} \text{ et } y = e\left(1 - \frac{x_d}{x_d - x_q}\right) + \frac{p}{m}e\frac{x_d x_q}{x_d - x_q}\frac{1}{x} .$$

Les termes « calculateur », « registre », « circuit de régulation », « soustracteur » et « multiplicateur » doivent être compris au sens large. Toutes ces fonctions peuvent être réalisées par un ou plusieurs circuits électroniques spécifiques logés sur une ou plusieurs cartes électroniques. Ces fonctions peuvent être réalisées sous forme matérielle et/ou logicielle. En particulier, les éléments 40, 41, 47, 48, 49, 46, 45, 50 et 37 peuvent être intégrés dans une même carte électronique comportant un ou plusieurs micro contrôleurs et/ou micro processeurs.

Dans l'exemple considéré, le rapport de défluxage est de 6, c'est-à-dire que la vitesse maximale de rotation du rotor est de six fois la vitesse de base, et par exemple de 1 350 tours par minute environ.

On ne sort bien entendu pas du cadre de la présente invention si le rapport de défluxage est différent de 6, notamment est supérieur ou égal à 2 par exemple. On dimensionne alors les interrupteurs électroniques 60 de l'onduleur 35 en conséquence.

Bien entendu, l'invention n'est pas limitée à l'exemple de réalisation qui vient d'être décrit. Par exemple, on peut réaliser différemment la machine électrique tout en ayant $X_d > X_q$.

Dans toute la description, l'expression « comportant un » doit être considérée comme étant synonyme de « comportant au moins un », sauf si le contraire est spécifié.

## Revendications

1. Ensemble comportant :

    - une machine électrique synchrone comportant :

        - un stator (10), et
        - au moins un rotor (20) à aimants permanents (21),

    la machine étant agencée de manière à avoir $X_d > X_q$, où $X_d$ est la réactance directe et $X_q$ la réactance en quadrature, cette machine constituant un moteur synchrone, et
    - un dispositif de commande d'un moteur synchrone permettant le fonctionnement du moteur à puissance sensiblement constante $P_o$ sur une plage de vitesses de rotation du rotor, comportant un calculateur (45) agencé pour déterminer les valeurs d'intensités directe $I_d$ et en quadrature $I_q$ du courant d'alimentation du moteur, les intensités $I_d$ et $I_q$ étant égales, à 20 % près, mieux à 10 % près, mieux encore à 5 % près, à :

$$I_d \cong i_d.I_0 \cong \text{-}i \sin \alpha.I_0 \text{ et } I_q \cong i_q.I_0 \cong i \cos \alpha.I_0,$$

    où $I_o$ est l'intensité maximale du courant imposée par le calibre du dispositif de commande,

$$\alpha = \text{arctg}\left(\frac{x_q}{x_d}\frac{(e-y)}{x}\right) ,$$

$$i = \sqrt{\left(\frac{x}{x_q}\right)^2 + \left(\frac{e-y}{x_d}\right)^2},$$

le courant unitaire circulant dans une phase de l'induit,

(x, y) étant l'une des racines réelles des équations

$$x^2 + y^2 = \frac{v^2}{m^2} \text{ et } y = e\left(1 - \frac{x_d}{x_d - x_q}\right) + \frac{p}{m}e\frac{x_d x_q}{x_d - x_q}\frac{1}{x},$$

m désigne le rapport entre la vitesse de rotation du rotor et la vitesse de base,

e est le rapport entre, d'une part, la force électromotrice, et d'autre part, le produit de m par la tension $V_o$ imposée par le réseau d'alimentation,

v est le rapport entre la tension aux borne d'une phase de l'induit et la tension maximale par phase $V_o$ imposée par le réseau d'alimentation,

p est le rapport entre la puissance effective et la puissance $P_o$,

$\alpha$ le déphasage entre l'intensité et la force électromotrice,

$x_d$ le quotient $\dfrac{X_d I_o}{m V_o}$, $X_d$ étant la réactance directe, et

$x_q$ le quotient $\dfrac{X_q I_o}{m V_o}$, où $X_q$ est la réactance en quadrature.

2. Ensemble selon la revendication précédente, **caractérisé par le fait que** la racine (x, y) choisie est celle qui minimise i.

3. Ensemble selon l'une quelconque des deux revendications précédentes, **caractérisé par le fait qu'**il comporte :

   - un onduleur (35) triphasé,
   - un contrôleur vectoriel (37) agencé pour transmettre en fonction des intensités $i_d$ et $i_q$ des signaux de commande à des interrupteurs électroniques (60) de l'onduleur (35).

4. Ensemble selon l'une quelconque des revendications précédentes, **caractérisée par le fait que** le rotor (20) est à concentration de flux, les aimants permanents (21) du rotor étant disposés entre des pièces polaires (22), les pièces polaires (22) du rotor comportant notamment chacune une face tournée vers le stator (10) qui présente une portion convexe (24), la portion convexe (24) d'une pièce polaire (22) présentant notamment un rayon de courbure compris entre 20 % et 30 % du rayon intérieur (R) du stator.

5. Ensemble selon la revendication précédente, **caractérisée par le fait que** les extrémités circonférentielles (25) de la portion convexe (24) d'une pièce polaire (22) sont décalées angulairement par rapport aux aimants permanents (21) adjacents à cette pièce polaire (22), le décalage angulaire $\beta$ des extrémités circonférentielles (25) par rapport aux aimants permanents (21) adjacents étant notamment compris :

   - entre $\dfrac{80°}{n_{dents}}$ et $\dfrac{100°}{n_{dents}}$, étant notamment de $\dfrac{90°}{n_{dents}}$ environ, pour une machine dont le rapport entre le nombre de dents $n_{dents}$ du stator et le nombre de pôles $n_{pôles}$ du rotor est de 3/2 ou qui vérifie la relation

$$\frac{n_{dents}}{n_{pôles}} = \frac{6n}{6n-2}$$, avec n entier supérieur ou égal à 2, et

- entre $\dfrac{50°}{n_{dents}}$ et $\dfrac{70°}{n_{dents}}$, étant notamment de $\dfrac{60°}{n_{dents}}$ environ, pour une machine qui vérifie la relation

$$\frac{n_{dents}}{n_{pôles}} = \frac{6n}{6n+2}$$, avec n entier supérieur ou égal à 2.

**6.** Ensemble selon l'une quelconque des revendications 4 à 5, **caractérisée par le fait que** chacun des aimants permanents (21) du rotor (20) se situe radialement en retrait des extrémités circonférentielles des portions convexes (24) des deux pièces polaires adjacentes (22), le retrait (r) dans la direction radiale des aimants (21) par rapport aux extrémités circonférentielles (25) des portions convexes (24) étant notamment compris entre 10 % et 20 % du rayon intérieur (R) du stator (10).

**7.** Ensemble selon l'une quelconque des revendications 4 à 6, **caractérisée par le fait que** chacune des pièces polaires (22) du rotor (20) comporte deux épaulements (26), au moins un aimant permanent (21) se situant entre les épaulements de deux pièces polaires (22) adjacentes.

**8.** Ensemble selon l'une quelconque des revendications 4 à 7, **caractérisée par le fait que** chacune des pièces polaires (22) du rotor (20) comporte une partie saillante (27) s'étendant en direction du stator (10), ayant des bords radiaux (28) qui sont décalés angulairement par rapport à des bords (29), dirigés radialement, des aimants permanents (21) adjacents à la pièce polaire (22).

**9.** Ensemble selon l'une quelconque des revendications précédentes, **caractérisée par le fait que** les aimants permanents (21) présentent, lorsque la machine est observée selon l'axe (X) de rotation du rotor, une section transversale de forme allongée d'axe longitudinal s'étendant dans une direction radiale.

**10.** Ensemble selon l'une quelconque des revendications précédentes, **caractérisée par le fait que** les aimants permanents (21) du rotor (20) présentent, lorsque la machine est observée selon l'axe (X) de rotation du rotor, une section transversale rectangulaire de grand côté orienté parallèlement à un rayon de la machine.

**11.** Ensemble selon l'une quelconque des revendications précédentes, **caractérisée par le fait que** le stator (10) comporte 6n dents (11) et le rotor (20) 6n $\pm$ 2 pôles (22), n étant supérieur ou égal à 2.

**12.** Procédé de contrôle d'un moteur d'un ensemble tel que défini dans la revendication 1, dans lequel :

- on mesure au moins la tension d'alimentation ($V_{DC}$) d'un onduleur relié au moteur et la vitesse de rotation ($\Omega$) du moteur, et
- on détermine par calcul en temps réel et/ou par accès à un registre sur la base au moins de la tension $V_{DC}$ et de la vitesse mesurée les intensités directe $i_d$ et en quadrature $i_q$ du courant d'alimentation permettant de maintenir la puissance constante pour une consigne de vitesse ($\Omega^*$) donnée au-dessus de la vitesse de base.

**13.** Procédé selon la revendication précédente, **caractérisé par le fait que** l'on détermine une consigne de couple t* en fonction au moins de l'écart entre la vitesse de rotation mesurée ($\Omega$) et la consigne de vitesse de rotation du rotor ($\Omega^*$).

**14.** Procédé selon la revendication précédente, **caractérisé par le fait que** l'on détermine une consigne de puissance (p*) en fonction au moins de la consigne de couple et de la vitesse de rotation mesurée.

**15.** Procédé selon la revendication précédente, **caractérisé par le fait que** l'on calcule les intensités directe $i_d$ et en quadrature $i_q$ en temps réel à partir de la consigne de puissance, de la vitesse de rotation mesurée et de la tension continue d'alimentation de l'onduleur.

## Fig. 1

## Fig. 2

# Fig. 3

# Fig. 4